# EUROPEAN PATENT SPECIFICATION

(11) **EP 3 056 920 B1**
(45) Date of publication and mention of the grant of the patent: **19.08.2020**
(21) Application number: 15154593.6
(22) Date of filing: 11.02.2015
(51) Int. Cl.: G01S 13/931, G01S 13/87, G01S 7/35, G01S 13/34, G01S 7/02

(54) **A vehicle radar system with two transceiver arrangements**
Kraftfahrzeugradarsystem mit zwei Sender-Empfänger-Anordnungen
Système de radar de véhicule avec deux ensembles émetteur-récepteur

(43) Date of publication of application: 17.08.2016
(73) Proprietor: Veoneer Sweden AB, 447 83 Vårgårda (SE)
(72) Inventor: Moss, Jonathan, 85778 Haimhausen (DE)
(74) Representative: Sandstedt, Jonas Sven James

(56) References cited:
- EP-A1- 2 653 887
- DE-A1-102013 210 256
- US-A1- 2012 176 266

## Description

### DESCRIPTION OF THE INVENTION

The present invention relates to a vehicle radar system comprising a first transceiver arrangement and a second transceiver arrangement. Each transceiver arrangement is arranged for generating FMCW (Frequency Modulated Continuous Wave) chirp signals, where the first transceiver arrangement comprises a first oscillator and is arranged to transmit a first chirp signal, and where the second transceiver arrangement comprises a second oscillator and is arranged to transmit a second chirp signal. The transceiver arrangements are arranged to receive reflected signals, mix the received signals with the respective transmitted chirp signal to obtain a respective first IF (Intermediate Frequency) signal and second IF signal, and to filter said IF signals with a certain filter bandwidth. The first chirp signal comprises at least one cycle of a first plurality of frequency ramps, and the second chirp signal comprises at least one cycle of a second plurality of frequency ramps.

The present invention also relates to a method for a vehicle radar system, where the method comprises:
- Generating FMCW (Frequency Modulated Continuous Wave) chirp signals.
- Transmitting a first chirp signal via a first transceiver arrangement, the first chirp signal having at least one cycle of a first plurality of frequency ramps.
- Transmitting a second chirp signal via a second transceiver arrangement, the second chirp signal having at least one cycle of a second plurality of frequency ramps.
- Receiving reflected signals via said transceiver arrangements.
- Mixing the received signals with the respective transmitted chirp signal to obtain a respective first IF (Intermediate Frequency) signal and second IF signal.
- Filtering said IF signals using a certain filter bandwidth.

Many vehicle radar systems comprise means for generating so-called chirp signals that are transmitted, reflected and received by means of appropriate antennas comprised in the radar system. A chirp signal is an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of the ramp. The change in frequency from start to finish may for example be of the order of 0.5% of the starting frequency.

The received signals, thus constituted by reflected radar echoes, are mixed with the transmitted chirp signal in order to convert the received signals to baseband signals. These baseband signals, or IF (Intermediate Frequency) signals, are amplified and transferred in a plurality of channels to an Analog Digital Converter (ADC) arrangement which is arranged to convert the received analog signals to digital signals. The digital signals are used for retrieving an azimuth angle of possible targets by simultaneously sampling and analyzing phase and amplitude of the received signals. The analysis is generally performed in one or more Digital Signal Processors (DSP:s) by means of Fast Fourier Transform (FFT) processing. When a vehicle comprises two radar transceivers with an overlapping field of view, for example two radar transceivers located at the front corners of a vehicle, a transmitted signal from one radar transceiver is reflected at an object and is received by the other radar transceiver. Depending on the receiving timings, this may cause erroneous detections, which in turn may cause problems when the detections are used to control safety devices in the vehicle, such as for example automatic braking systems.

Especially when two FMCW ramps are transmitted at roughly the same time at the two radar transceivers, the risk of such erroneous detections increases, and it is thus desired to keep the ramps of the two radar transceivers separated in time. This may for example be done by means of randomized starting times for each cycle of corresponding ramps of the two radar transceivers.

US 2013/0257643 discloses a first radar apparatus that transmits triangular FMCW waveforms with a first predetermined interval interposed therebetween. Similarly, a second radar apparatus transmits triangular FMCW waveforms with a second predetermined interval interposed therebetween. The predetermined intervals are different from each other, with the intention to avoid that two waveforms are transmitted at roughly the same time.

The document US 2012/176266 discloses a radar apparatus that is adapted for transmitting a transmission signal at a controlled timing in order to avoid signal interference.

Each radar transceiver comprises its own oscillator, each radar transceiver has its own frequency reference such as an oscillator crystal. Such crystals have small deviations from crystal to crystal due to structural differences and temperature differences. This may in turn lead to that during a cycle the FMCW ramps sequences of the radar transceivers may be mutually displaced during each cycle, which may result in that one cycle may comprise a plurality of ramps that are transmitted at roughly the same time.

The object of the present invention is thus to provide a vehicle radar system which is arranged for a decreased number of erroneous detections.

This object is obtained by means of a vehicle radar system comprising a first transceiver arrangement and a second transceiver arrangement. Each transceiver arrangement is arranged for generating FMCW (Frequency Modulated Continuous Wave) chirp signals, where the first transceiver arrangement comprises a first oscillator and is arranged to transmit a first chirp signal, and where the second transceiver arrangement comprises a second oscillator and is arranged to transmit a second chirp signal. The transceiver arrangements are arranged to receive reflected signals, mix the received signals with the respective transmitted chirp signal to obtain a respective first IF (Intermediate Frequency) signal and second IF signal, and to filter said IF signals with a certain filter bandwidth. The first chirp signal comprises at least one cycle of a first plurality of sequential frequency ramps which are separated by a first delay time and defined by a first ramp period time and ramp time, and the second chirp signal comprises at least one cycle of a second plurality of sequential frequency ramps which are separated by a second delay time and defined by a second ramp period time and ramp time. Each one of a plurality of frequency ramps in the second plurality of frequency ramps is delayed with an added time that is either fixed or varied from cycle to cycle, such that the second delay time equals a sum of the first delay time and the added time, and such that at least one frequency ramp in the first plurality of frequency ramps and at least one frequency ramp in the second plurality of frequency ramps run such that the difference in frequency between them is within the filter bandwidth.

This object is also obtained by means of a method for a vehicle radar system, where the method comprises:
- Generating FMCW (Frequency Modulated Continuous Wave) chirp signals.
- Transmitting a first chirp signal via a first transceiver arrangement, the first chirp signal having at least one cycle of a first plurality of sequential frequency ramps which are separated by a first delay time and defined by a first ramp period time and ramp time.
- Transmitting a second chirp signal via a second transceiver arrangement, the second chirp signal having at least one cycle of a second plurality of sequential frequency ramps which are separated by a second delay time and defined by a second ramp period time and ramp time.
- Receiving reflected signals via said transceiver arrangements.
- Mixing the received signals with the respective transmitted chirp signal to obtain a respective first IF (Intermediate Frequency) signal and second IF signal.
- Filtering said IF signals using a certain filter bandwidth.
- Delaying each one of a plurality of frequency ramps in the second plurality of frequency ramps with an added time that is either fixed or varied from cycle to cycle, such that the second delay time equals a sum of the first
delay time and the added time, and such that at least one frequency ramp in the first plurality of frequency ramps and at least one frequency ramp in the second plurality of frequency ramps run such that the difference in frequency between them is within the filter bandwidth.

According to another example, one frequency ramp in the first plurality of frequency ramps and one frequency ramp in the second plurality of frequency ramps run at the same time within a margin of 1% during each cycle.

According to another example, the radar system is arranged to:
- process all ramps in a cycle by means of a first FFT, Fast Fourier Transform, to acquire target information at different ranges in a plurality of complex vectors that corresponds to the number of ramps in a cycle;
- analyze one vector element at a time for all complex vectors by means of a second FFT and then create a two-dimensional matrix in the Doppler domain comprising data regarding range and relative speed; and to
- identify erroneous detections that appear at a distinct range and are spread, and delete these from further processing.

Other examples are disclosed in the dependent claims.

A number of advantages are obtained by means of the present invention. Mainly, the risk of erroneous detections is reduced compared to prior art.

### BRIEF DESCRIPTION OF THE DRAWINGS

The present invention will now be described more in detail with reference to the appended drawings, where:
- Figure 1: shows a schematic top view of a vehicle;
- Figure 2: shows a simplified schematic of a vehicle radar system;
- Figure 3a: shows a first chirp signal;
- Figure 3b: shows a second chirp signal;
- Figure 4a: shows a first filtered IF signal;
- Figure 4b: shows a second filtered IF signal; and
- Figure 5: shows a flowchart for a method according to the present invention.

### DETAILED DESCRIPTION

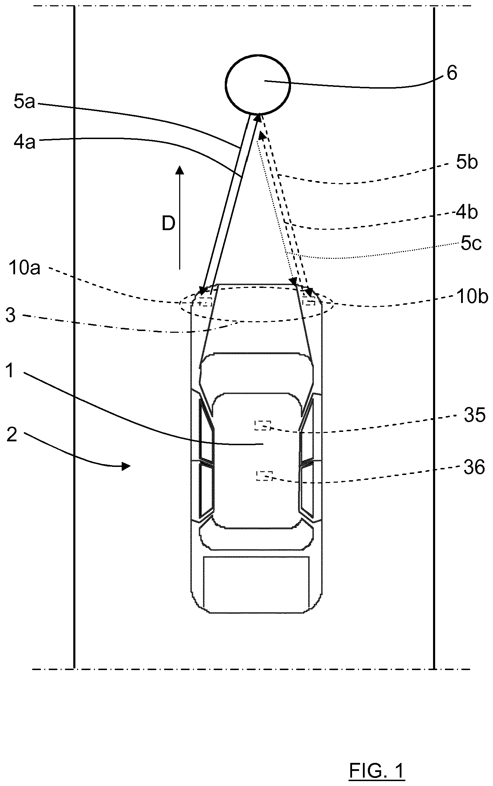

Figure 1 schematically shows a top view of a vehicle 1 arranged to run on a road 2 in a direction D, where the vehicle 1 comprises a vehicle radar system 3 which is arranged to distinguish and/or resolve single targets from the surroundings by transmitting signals 4 and receiving reflected signals 5a, 5b and using a Doppler effect in a previously well-known manner. The vehicle radar system 3 is arranged to provide azimuth angles of possible objects 6 by simultaneously sampling and analyzing phase and amplitude of the received signals 5a, 5b.

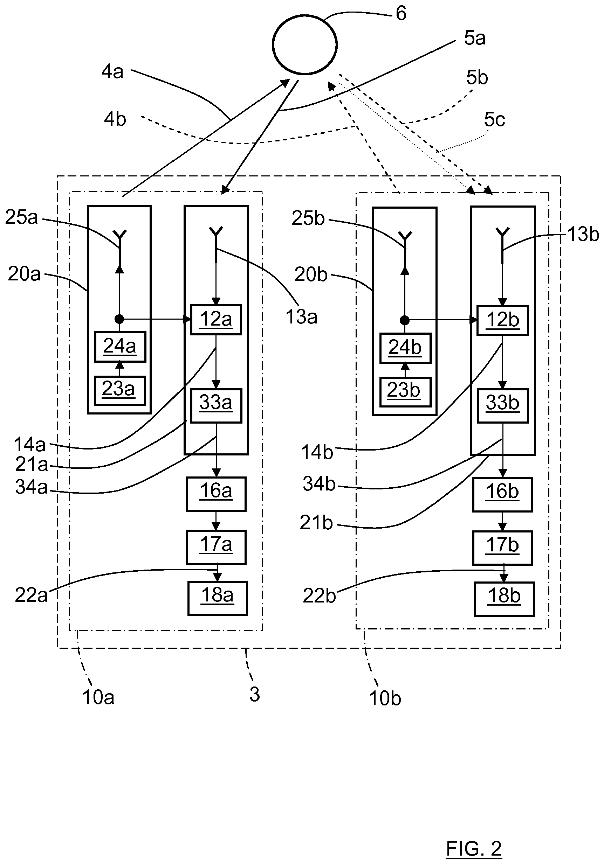

With reference also to Figure 2, the vehicle radar system 3 comprises a first transceiver arrangement 10a and a second transceiver arrangement 10b, each transceiver arrangement 10a, 10b being arranged for generating sweep signals in the form of FMCW, Frequency Modulated Continuous Wave, chirp signals of a previously known kind. The first transceiver arrangement 10a comprises a first transmitter 20a, a first receiver 21a, a first Analog to Digital Converter (ADC) arrangement 16a, a first sampling and timing arrangement 17a and a first DSP (Digital Signal Processor) arrangement 18a. The second transceiver arrangement 10b comprises a second transmitter 20b, a second receiver 21b, a second ADC arrangement 16b, a second sampling and timing arrangement 17b and a second DSP arrangement 18b.

The first transmitter 20a comprises a first oscillator 23a, a first signal generator 24a and a first transmit antenna arrangement 25a. The second transmitter 20b comprises a second oscillator 23b, a second signal generator 24b and a second transmit antenna arrangement 25b.

The first receiver 21a comprises a first receiver mixer 12a and a first receiver antenna arrangement 13a. The second receiver 21b comprises a second receiver mixer 12b and a second receiver antenna arrangement 13b.

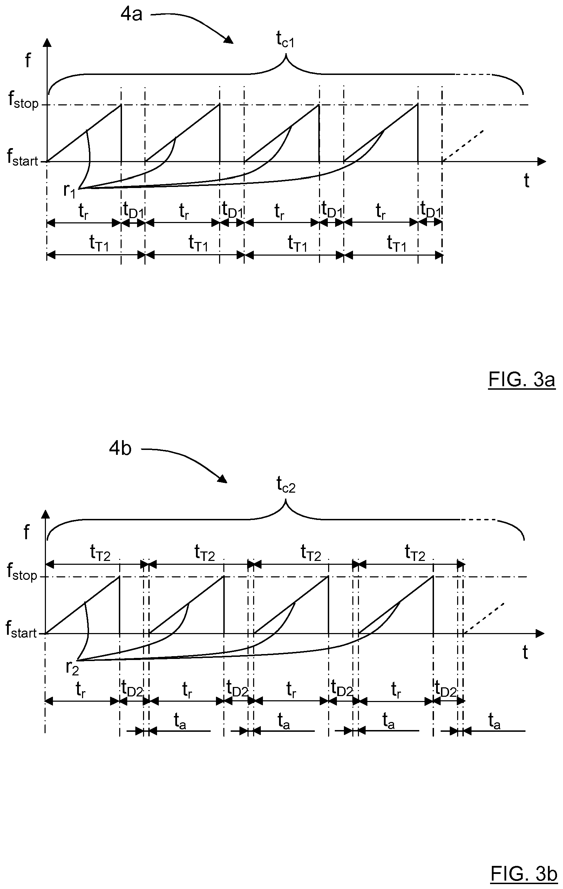

With reference also to Figure 3a and Figure 3b, the first transmitter 20a is arranged to transmit a first chirp signal 4a and the second transmitter 20b is arranged to transmit a second chirp signal 4b. The receivers 21a, 21b are arranged to receive reflected signals 5a, 5b, where the transmitted chirp signals 4a, 4b have been reflected by an object 6 as will be discussed more in detail below.

A chirp signal 4a, 4b is in the form of a continuous sinusoid where the frequency varies from a first frequency fₛₜₐᵣₜ to a second frequency fₛₜₒₚ over the course of a ramp, where the magnitude of the first frequency fₛₜₐᵣₜ falls below the magnitude of the second frequency fₛₜₒₚ. The change in frequency from start to finish for each ramp may for example be of the order of 0.5% of the first frequency fₛₜₐᵣₜ.

As shown in Figure 3a, the first chirp signal 4a comprises repeating cycles of a first plurality of frequency ramps r₁ and as shown in Figure 3b, the second chirp signal 4b comprises repeating cycles of a second plurality of frequency ramps r₂. As mentioned above, the frequency varies from a first frequency fₛₜₐᵣₜ to a second frequency fₛₜₒₚ over the course of each ramp r₁, r₂, where the magnitude of the first frequency fₛₜₐᵣₜ falls below the magnitude of the second frequency fₛₜₒₚ.

A cycle for the first chirp signal 4a lasts for a certain first cycle time t_{c1} and a cycle for the second chirp signal 4b lasts for a certain second cycle time t_{c2}. Each ramp lasts a certain ramp time tᵣ, the ramp time tᵣ being the same for the first chirp signal 4a and the second chirp signal 4b. The first chirp signal 4a has a first ramp period time t_{T1} and the second chirp signal 4b has a second ramp period time t_{T2}, the ramp period times t_{T1}, t_{T2} being the respective time between the starting of two consecutive ramps. Between two consecutive ramps of the first chirp signal 4a there is a first delay time t_{D1}, and between two consecutive ramps of the second chirp signal 4b there is a second delay time t_{D2}.

Referring back to Figure 2, a first transmitted signal 4a, indicated with a solid line, and a second transmitted signal 4b, indicated with a dashed line, are reflected at the object 6. The first transmitted signal 4a results in a first reflected signal 5a, indicated with a solid line, where the first reflected signal 5a is received by the first receiver 21a via the first antenna arrangement 13a. The second transmitted signal 4b results in a second reflected signal 5b, indicated with a dashed line, where the second reflected signal 5b is received by the second receiver 21b via the second antenna arrangement 13b. The received signals 5a, 5b, thus constituted by reflected radar echoes, are mixed. In the first receiver 21a, the first received signal 5a is mixed with the first chirp signal 4a in the first receiver mixer 12a, and in the second receiver, the second received signal 5b is mixed with the second chirp signal 4b in the second receiver mixer 12b.

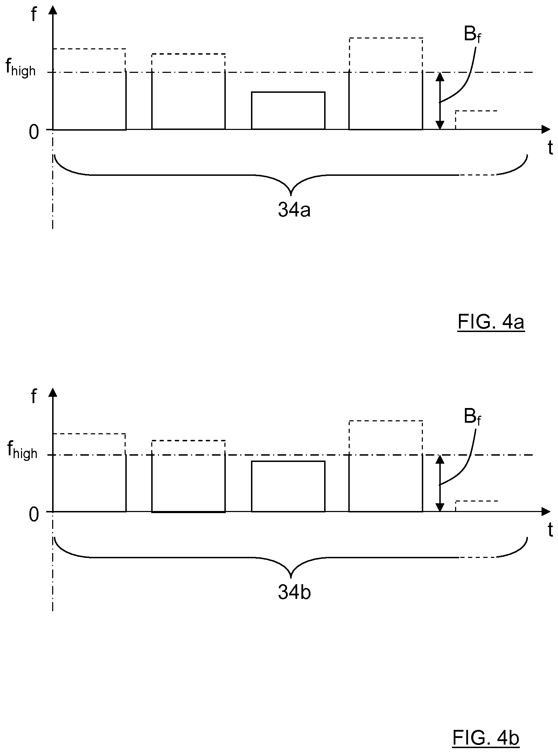

In this way, a corresponding first IF (Intermediate Frequency) signal 14a and second IF signal 14b is acquired and filtered in a corresponding first IF filter 33a and second IF filter 33b such that a first filtered IF signal 34a and a second filtered IF signal 34b is acquired, as also shown in Figure 4a and Figure 4b. Figure 4a shows an example of the first filtered IF signal 34a, and Figure 4b shows an example of the second filtered IF signal 34b, where the filtered IF signals 34a, 34b may differ from each other more or less. Figure 4a and Figure 4b show an example of a scenario where there are no targets in the environment, such that the received signal at a certain transceiver arrangement 10a, 10b only comes from the other transceiver arrangement 10a, 10b.

The difference frequency of the filtered IF signals 34a, 34b relates to the target distance. The filtered IF signals 34a, 34b are transferred from the corresponding receiver 21a, 21b to the corresponding ADC arrangements 16a, 16b and sampling and timing arrangements 17a, 17b, where the respective IF signals 14a, 14b are sampled at a certain predetermined sampling frequency and converted to digital signals 22a, 22b. Each DSP arrangement 18a, 18b is adapted for radar signal processing of the digital signals 22a, 22b by means of a first FFT (Fast Fourier Transform) to convert the digital signals 22a, 22b to a range domain, and a second FFT to combine the results from successive chirp signal ramps into the Doppler domain in a previously known manner.

With reference to Figure 2, Figure 4a and Figure 4b, the first IF filter 33a and the second IF filter 33b are filters of a kind that have a relatively high degree of rejection of signals having frequencies exceeding a common filter bandwidth B_{f}; in this example 8 MHz. The filters 33a, 33b may be low-pass filters that have a respective pass band between DC, 0 MHz, and a corresponding upper frequency f_{high}, here then between about 0 - 8 MHz.

As shown in Figure 1 and Figure 2, the first transmitted signal 4a also results in a third reflected signal 5c, indicated with a dotted line, where the third reflected signal 5c is received by the second receiver 21b via the second antenna arrangement 13b. This third reflected signal 5c may cause erroneous detections which should be avoided. Although not shown, the second transmitted signal 4b may also result in reflected signals that are received by the first receiver 21a via the first antenna arrangement 13a. Such signals may also cause erroneous detections.

According to the present invention, each frequency ramp in the second plurality of frequency ramps is delayed with a certain time such that at only one frequency ramp in the first plurality of frequency ramps and only one frequency ramp in the second plurality of frequency ramps run at the same time within a margin of 1% during each cycle. In other words, the second delay time t_{D2} exceeds the first delay time t_{D1}, and the second ramp period time t_{T2} exceeds the first ramp period time t_{T1}. In this example, the second delay time t_{D2} exceeds the first delay time t_{D1} with a certain additional time tₐ i.e., t_{D2} = t_{D1}+tₐ. The additional time tₐ may be fixed for a particular transceiver arrangement 10a, 10b, or may be varied from cycle to cycle.

More generally, a plurality of frequency ramps in the second plurality of frequency ramps r₂ are delayed with corresponding added times tₐ such that at least one frequency ramp in the first plurality of frequency ramps and one frequency ramp in the second plurality of frequency ramps will run such that the difference in frequency between them is within the filter bandwidth B_{f}. For example, this may lead to the situation that these frequency ramps run at the same time within a margin of 1% during each cycle as indicated above.

In this example, with reference to Figure 3a, the measurement time for the first cycle t_{c1} is 23.55 ms, and contains 256 ramps, each having a ramp time tᵣ of 82 µs with a first delay time t_{D1} of 10 µs between each ramp r1. The rest of the time before the next cycle can be used only for signal processing with the RF MMICs powered off to save power. With reference to Figure 3b, the second cycle time t_{c2} is 23.6 ms, and contains 256 ramps each having a ramp time tᵣ of 82 µs with a second delay time t_{D2} of 10.2 µs between each ramp.

In this way the ramps r₂ of the second chirp signal 4b are slid past the ramps r₁ of the first chirp signal 4a during a cycle such that only one frequency ramp in the first plurality of frequency ramps r₁ and the second plurality of frequency ramps r₂ run at the same time according to the above. Since it is known that only one ramp will experience this for each chirp signal, it is possible to reject the resulting erroneous detection.

To remove the false detections, two examples of possible approaches follow below.

All ramps in a cycle may be processed using the first FFT to acquire target information for the targets at different ranges. This results in a number of complex vectors, which number corresponds to the number of ramps in a cycle; in this example 256. For all complex vectors, one vector element at a time is analyzed by means of the second FFT, then creating a two-dimensional matrix in the Doppler domain comprising data regarding range and relative speed. In other words, first the first vector elements of all vectors are analyzed by means of the second FFT, then the second vector elements of all vectors, and so on. In the two-dimensional Doppler domain matrix, one would normally look for local peaks since a target will appear as a peak at a distinct range and at a distinct Doppler. A false target resulting from an erroneous detection, which is present in only one ramp according to the above, will appear at a distinct range, but would be spread and can thus be identified and deleted from further processing.

Alternatively, all ramps in a cycle may be processed individually using the first FFT to acquire target information for the targets at different ranges. Each ramp is monitored for interference signals that are determined to result from erroneous detections, and then those frequencies are deleted from the ramp in question; alternatively the complete ramp is deleted. The second FFT may then be used in the intended manner, supposedly without interference due to erroneous detection.

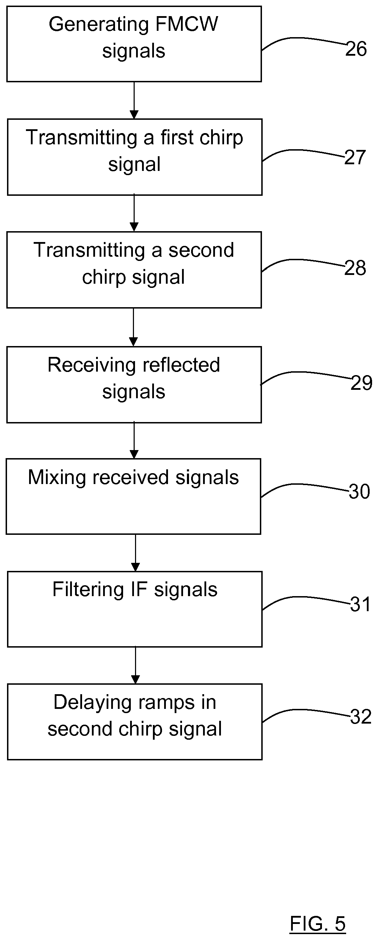

With reference to Figure 5, the present invention also relates to a method for a vehicle radar system 3, 3', where the method comprises:
26: Generating FMCW (Frequency Modulated Continuous Wave) chirp signals.
27: Transmitting a first chirp signal 4a via a first transceiver arrangement 10a, where the first chirp signal 4a has at least one cycle of a first plurality of frequency ramps r₁.
28: Transmitting a second chirp signal 4b via a second transceiver arrangement 10b, where the second chirp signal 4b has at least one cycle of a second plurality of frequency ramps r₂.
29: receiving reflected signals 5a, 5b via said transceiver arrangements 10a, 10b.
30: Mixing the received signals 5a, 5b with the respective transmitted chirp signal 4a, 4b to obtain a respective first IF (Intermediate Frequency), signal 14a and second IF signal 14b.
31: Filtering said IF signals 14a, 14b using a certain filter bandwidth B_{f}.
32: Delaying a plurality of frequency ramps in the second plurality of frequency ramps r₂ with corresponding added times tₐ such that at least one frequency ramp in the first plurality of frequency ramps and at least one frequency ramp in the second plurality of frequency ramps run such that the difference in frequency between them is within the filter bandwidth B_{f}.

As indicated in Figure 1, the vehicle 1 comprises a safety control unit 35 and safety means 36, for example an emergency braking system and/or an alarm signal device. The safety control unit 36 is arranged to control the safety means 36 in dependence of input from the radar system 3.

For example, the ramp time tᵣ does not have to be the same for the first chirp signal 4a and the second chirp signal 4b; instead the ramp times could be adjusted such that the cycle time is the same for the first chirp signal 4a and the second chirp signal 4b.

Furthermore, the second delay time t_{D2} may exceed the first delay time t_{D1} with an additional time that may alter; for example every second additional time may be 0.5 µs and every other second additional time may be 0 µs. This may for example be the case where each transmitting antenna arrangement comprises two spatially separated transmitting antennas, the chirp signals comprises two consecutive ramps from one transmitting antenna at a time. The additional time of 0.5 µs is then added after a series of two transmitted ramps, one of each antenna. All times mentioned are of course only mentioned by way of example, any suitable times and timing schedules are clearly possible in a radar system according to the above.

At least a plurality of frequency ramps in the second plurality of frequency ramps r₂ are delayed with corresponding times during a cycle.

The radar system may be implemented in any type of vehicle such as cars, trucks and buses as well as boats and aircraft.

The schematics of vehicle radar systems are simplified, only showing parts that are considered relevant for an adequate description of the present invention. It is understood that the general design of radar systems of this kind is well-known in the art. For example, no devices that are arranged to use the acquired target information is shown, but many different such devices are of course conceivable; for example a warning and/or collision avoidance system.

The number of antenna arrangements, antennas within each antenna arrangement and IF signals may vary.

The ADC arrangement and the DSP arrangement should each one be interpreted as having a corresponding ADC or DSP functionality, and may each be constituted by a plurality of separate components. Alternatively, each ADC arrangement may be comprised in one ADC chip, and each DSP arrangement may be comprised in one DSP chip.

Each antenna arrangement 13a, 13b; 25a, 25b may for example comprise on or more antennas, and each antenna may be constituted by one antenna element or by an array of antenna elements.

The additional time should be added in such a way that when the corresponding pluralities of frequency ramps r₁, r₂ in the chirp signals 4a, 4b overlap, at least one frequency ramp in the first plurality of frequency ramps r1 and at least one frequency ramp in the second plurality of frequency ramps r2 run at the same time within a margin of 1%, during each cycle.

In the example shown, there has only been one receiver channel. Of course, a receiver in this context may be arranged for a plurality of channels.

Generally, the hardware used to generate the radar signal may be active only for part of the cycle period and powered down for the rest of the cycle, i.e. when it is not needed.

The first delay time t_{D1} may be changed every N cycles, where N is an integer. The first delay time t_{D1} is previously known or shared by all transceiver arrangements 10a, 10b within the same vehicle 1. This may reduce possible interference by a similar radar system in a nearby vehicle. If all radar sensors used the same value for the first delay time t_{D1}, external radars may be synchronous to within 1% of the victim radar for all ramps, resulting in undesired interference. Varying the first delay time t_{D1} according to the above would reduce such interference. When t_{D1} is changed, tₐ and hence t_{D2} may also vary.

The filter bandwidth B_{f} may comprise the effect of digital filters (not shown) in the respective transceiver arrangement 10a, 10b.

## Claims

1. A vehicle radar system (3) comprising a first transceiver arrangement (10a) and a second transceiver arrangement (10b), each transceiver arrangement (10a, 10b) being arranged for generating FMCW, Frequency Modulated Continuous Wave, chirp signals, where the first transceiver arrangement (10a) comprises a first oscillator (23a) and is arranged to transmit a first chirp signal (4a) and where the second transceiver arrangement (10b) comprises a second oscillator (23b) and is arranged to transmit a second chirp signal (4b), where the transceiver arrangements (10a, 10b) are arranged to:
receive reflected signals (5a, 5b);
mix the received signals (5a, 5b) with the respective transmitted chirp signal (4a, 4b) to obtain a respective first IF, Intermediate Frequency, signal (14a) and second IF signal (14b); and to
filter said IF signals (14a, 14b) with a certain filter bandwidth (B_{f}) ;
where the first chirp signal (4a) comprises at least one cycle of a first plurality of sequential frequency ramps (r₁) which are separated by a first delay time (t_{D1}) and defined by a first ramp period time (t_{T1}) and ramp time (tᵣ), and the second chirp signal (4b) comprises at least one cycle of a second plurality of sequential frequency ramps (r₂) which are separated by a second delay time (t_{D2}) and defined by a second ramp period time (t_{T2}) and ramp time (tᵣ), **characterized in that** each one of a plurality of frequency ramps in the second plurality of frequency ramps (r₂) is delayed with an added time (tₐ) that is either fixed or varied from cycle to cycle, such that the second delay time (t_{D2}) equals a sum of the first delay time (t_{D1}) and the added time (tₐ), and such that at least one frequency ramp in the first plurality of frequency ramps and at least one frequency ramp in the second plurality of frequency ramps run such that the difference in frequency between them is within the filter bandwidth (B_{f}).

2. A vehicle radar system (3) according to claim 1, **characterized in that** one frequency ramp in the first plurality of frequency ramps (r₁) and one frequency ramp (r₂) in the second plurality of frequency ramps run at the same time within a margin of 1% during each cycle.

3. A vehicle radar system (3) according to any one of the claims 1 or 2, **characterized in that** the radar system (3) is arranged to provide input to a safety control unit (35) that in turn is arranged to control safety means (36), where the radar system (3), the safety control unit (35) and the safety means (36) are comprised in a vehicle (1).

4. A vehicle radar system (3) according to any one of the preceding claims, **characterized in that** the radar system (3) is arranged to:
- process all ramps in a cycle by means of a first FFT, Fast Fourier Transform, to acquire target information at different ranges in a plurality of complex vectors that corresponds to the number of ramps in a cycle;
- analyze one vector element at a time for all complex vectors by means of a second FFT and then create a two-dimensional matrix in the Doppler domain comprising data regarding range and relative speed; and to
- identify erroneous detections that appear at a distinct range and are spread, and delete these from further processing.

5. A method for a vehicle radar system (3), where the method comprises:
(26) generating FMCW, Frequency Modulated Continuous Wave, chirp signals;
(27) transmitting a first chirp signal (4a) via a first transceiver arrangement (10a), the first chirp signal (4a) having at least one cycle of a first plurality of sequential frequency ramps (r₁) which are separated by a first delay time (t_{D1}) and defined by a first ramp period time (t_{T1}) and ramp time (tᵣ);
(28) transmitting a second chirp signal (4b) via a second transceiver arrangement (10b), the second chirp signal (4b) having at least one cycle of a second plurality of sequential frequency ramps (r₂) which are separated by a second delay time (t_{D2}) and defined by a second ramp period time (t_{T2}) and ramp time (tᵣ);
(29) receiving reflected signals (5a, 5b) via said transceiver arrangements (10a, 10b);
(30) mixing the received signals (5a, 5b) with the respective transmitted chirp signal (4a, 4b) to obtain a respective first IF, Intermediate Frequency, signal (14a) and second IF signal (14b); and
(31) filtering said IF signals (14a, 14b) using a certain filter bandwidth (B_{f}) ;
**characterized in that** the method further comprises:
(32) delaying each one of a plurality of frequency ramps in the second plurality of frequency ramps (r₂) with an added time (tₐ) that is either fixed or varied from cycle to cycle, such that the second delay time (t_{D2}) equals a sum of the first delay time (t_{D1}) and the added time (tₐ), and such that at least one frequency ramp in the first plurality of frequency ramps and at least one frequency ramp in the second plurality of frequency ramps run such that the difference in frequency between them is within the filter bandwidth (B_{f}).

6. A method according to claim 5, **characterized in that** one frequency ramp in the first plurality of frequency ramps (r₁) and one frequency ramp (r₂) in the second plurality of frequency ramps run at the same time within a margin of 1% during each cycle.

7. A method according to any one of the claims 5 or 6, **characterized in that** the method comprises:
- processing all ramps in a cycle by means of a first FFT, Fast Fourier Transform, to acquire target information at different ranges in a plurality of complex vectors that corresponds to the number of ramps in a cycle;
- analyzing one vector element at a time for all complex vectors by means of a second FFT and then creating a two-dimensional matrix in the Doppler domain comprising data regarding range and relative speed; and
- identifying erroneous detections that appear at a distinct range and are spread, and deleting these from further processing.

8. A method according to any one of the claims 5-7, **characterized in that** the hardware used to generate the radar signal is only active for part of the cycle period and powered down for the rest of the cycle.

9. A method according to any one of the claims 5-8, **characterized in that** the first delay time t_{D1} is changed every N cycles, where N is an integer.

## Patentansprüche

1. Fahrzeugradarsystem (3), das eine erste Sender-Empfänger-Anordnung (10a) und eine zweite Sender-Empfänger-Anordnung (10b) umfasst, wobei jede Sender-Empfänger-Anordnung (10a, 10b) so angeordnet ist, dass sie frequenzmodulierte Dauerstrich-Chirp-Signale (FMCW, Frequency Modulated Continuous Wave) erzeugt, wobei die erste Sender-Empfänger-Anordnung (10a) einen ersten Oszillator (23a) umfasst und so angeordnet ist, dass sie ein erstes Chirp-Signal (4a) überträgt, und wobei die zweite Sender-Empfänger-Anordnung (10b) einen zweiten Oszillator (23b) umfasst und so angeordnet ist, dass sie ein zweites Chirp-Signal (4b) überträgt, wobei die Sender-Empfänger-Anordnungen (10a, 10b) angeordnet sind zum:
Empfangen reflektierter Signale (5a, 5b);
Mischen der empfangenen Signale (5a, 5b) mit dem jeweiligen übertragenen Chirp-Signal (4a, 4b), um ein jeweiliges erstes ZF-Signal, Zwischenfrequenzsignal, (14a) und zweites ZF-Signal (14b) zu erhalten; und
Filtern der ZF-Signale (14a, 14b) mit einer bestimmten Filterbandbreite (Bf);
wobei das erste Chirp-Signal (4a) mindestens einen Zyklus einer ersten Vielzahl von sequentiellen Frequenzrampen (r₁) umfasst, die durch eine erste Verzögerungszeit (t_{D1}) getrennt und durch eine erste Rampenperiodenzeit (t_{T1}) und Rampenzeit (tᵣ) definiert sind, und das zweite Chirp-Signal (4b) mindestens einen Zyklus einer zweiten Vielzahl von sequentiellen Frequenzrampen (r₂) umfasst, die durch eine zweite Verzögerungszeit (t_{D2}) getrennt und durch eine zweite Rampenperiodenzeit (t_{T2}) und Rampenzeit (tᵣ) definiert sind, **dadurch gekennzeichnet, dass** jede von einer Vielzahl von Frequenzrampen in der zweiten Vielzahl von Frequenzrampen (r₂) mit einer addierten Zeit (tₐ) verzögert wird, die entweder fest ist oder von Zyklus zu Zyklus variiert wird, so dass die zweite Verzögerungszeit (t_{D2}) gleich der Summe aus der ersten Verzögerungszeit (t_{D1}) und der addierten Zeit (tₐ) ist, und so, dass mindestens eine Frequenzrampe in der ersten Vielzahl von Frequenzrampen und mindestens eine Frequenzrampe in der zweiten Vielzahl von Frequenzrampen so verläuft, dass die Frequenzdifferenz zwischen ihnen innerhalb der Filterbandbreite liegt (Bf).

2. Fahrzeugradarsystem (3) nach Anspruch 1, **dadurch gekennzeichnet, dass** eine Frequenzrampe in der ersten Vielzahl von Frequenzrampen (r₁) und eine Frequenzrampe (r₂) in der zweiten Vielzahl von Frequenzrampen zur gleichen Zeit innerhalb einer Spanne von 1 % während jedes Zyklus laufen.

3. Fahrzeugradarsystem (3) nach einem der Ansprüche 1 oder 2, **dadurch gekennzeichnet, dass** das Radarsystem (3) so angeordnet ist, dass es einen Eingang für eine Sicherheitssteuereinheit (35) bereitstellt, die ihrerseits so angeordnet ist, dass sie Sicherheitsmittel (36) steuert, wobei das Radarsystem (3), die Sicherheitssteuereinheit (35) und die Sicherheitsmittel (36) in einem Fahrzeug (1) umfasst sind.

4. Fahrzeugradarsystem(3) nach einem der vorstehenden Ansprüche, **dadurch gekennzeichnet, dass** das Radarsystem (3) angeordnet ist zum:
- Verarbeiten aller Rampen in einem Zyklus mittels einer ersten FFT, Fast-Fourier-Transformation, um Zielinformationen in unterschiedlichen Bereichen in einer Vielzahl komplexer Vektoren zu erfassen, die der Anzahl der Rampen in einem Zyklus entspricht;
- Analysieren jeweils eines Vektorelements für alle komplexen Vektoren mittels einer zweiten FFT und danach Erzeugen einer zweidimensionalen Matrix im Dopplerbereich, die Daten bezüglich Reichweite und Relativgeschwindigkeit umfasst; und
- Identifizieren fehlerhafter Funde, die in einem anderen Bereich auftreten und sich ausbreiten, und diese aus der weiteren Verarbeitung löschen.

5. Verfahren für ein Fahrzeugradarsystem (3), wobei das Verfahren umfasst:
(26) Erzeugen frequenzmodulierter Dauerstrich-Chirp-Signale (FMCW, Frequency Modulated Continuous Wave);
(27) Übertragen eines ersten Chirp-Signals (4a) über eine erste Sender-Empfänger-Anordnung (10a), wobei das erste Chirp-Signal (4a) mindestens einen Zyklus aus einer ersten Vielzahl von sequentiellen Frequenzrampen (r₁) aufweist, die durch eine erste Verzögerungszeit (t_{D1}) getrennt und durch eine erste Rampenperiodenzeit (t_{T1}) und Rampenzeit (tᵣ) definiert sind;
(28) Übertragen eines zweiten Chirp-Signals (4b) über eine zweite Sender-Empfänger-Anordnung (10b), wobei das zweite Chirp-Signal (4b) mindestens einen Zyklus einer zweiten Vielzahl von sequentiellen Frequenzrampen (r₂) aufweist, die durch eine zweite Verzögerungszeit (t_{D2}) getrennt und durch eine zweite Rampenperiodenzeit (t_{T2}) und Rampenzeit (tᵣ) definiert sind;
(29) Empfangen reflektierter Signale (5a, 5b) über die Sender-Empfänger-Anordnungen (10a, 10b);
(30) Mischen der empfangenen Signale (5a, 5b) mit dem jeweiligen übertragenen Chirp-Signal (4a, 4b), um ein jeweiliges erstes ZF-Signal, Zwischenfrequenzsignal, (14a) und zweites ZF-Signal (14b) zu erhalten; und
(31) Filtern der ZF-Signale (14a, 14b) unter Verwendung einer bestimmten Filterbandbreite (B_{f});
**dadurch gekennzeichnet, dass** das Verfahren ferner umfasst:
(32) Verzögern jeder von einer Vielzahl von Frequenzrampen in der zweiten Vielzahl von Frequenzrampen (r₂) mit einer addierten Zeit (tₐ), die entweder fest ist oder von Zyklus zu Zyklus variiert wird, so dass die zweite Verzögerungszeit (t_{D2}) gleich einer Summe aus der ersten Verzögerungszeit (t_{D1}) und der addierten Zeit (tₐ) ist, und so, dass mindestens eine Frequenzrampe in der ersten Vielzahl von Frequenzrampen und mindestens eine Frequenzrampe in der zweiten Vielzahl von Frequenzrampen so verläuft, dass die Frequenzdifferenz zwischen ihnen innerhalb der Filterbandbreite liegt (Bf).

6. Verfahren nach Anspruch 5, **dadurch gekennzeichnet, dass** eine Frequenzrampe in der ersten Vielzahl von Frequenzrampen (r₁) und eine Frequenzrampe (r₂) in der zweiten Vielzahl von Frequenzrampen zur gleichen Zeit innerhalb einer Spanne von 1 % während jedes Zyklus laufen.

7. Verfahren nach einem der Ansprüche 5 oder 6, **dadurch gekennzeichnet, dass** das Verfahren umfasst:
- Verarbeiten aller Rampen in einem Zyklus mittels einer ersten FFT, der Fast-Fourier-Transformation, um Zielinformationen in unterschiedlichen Bereichen in einer Vielzahl komplexer Vektoren zu erfassen, die der Anzahl der Rampen in einem Zyklus entspricht;
- Analysieren jeweils eines Vektorelements für alle komplexen Vektoren mittels einer zweiten FFT und danach Erzeugen einer zweidimensionalen Matrix im Dopplerbereich, die Daten bezüglich Reichweite und Relativgeschwindigkeit umfasst; und
- Identifizieren fehlerhafter Funde, die in einem anderen Bereich auftreten und sich ausbreiten, und diese aus der weiteren Verarbeitung löschen.

8. Verfahren nach einem der Ansprüche 5 bis 7, **dadurch gekennzeichnet, dass** die zur Erzeugung des Radarsignals verwendete Hardware nur für einen Teil der Zyklusdauer aktiv und für den Rest des Zyklus abgeschaltet ist.

9. Verfahren nach einem der Ansprüche 5 bis 8, **dadurch gekennzeichnet, dass** die erste Verzögerungszeit t_{D1} alle N Zyklen geändert wird, wobei N eine ganze Zahl ist.

## Revendications

1. Système radar de véhicule (3) comprenant un premier agencement d'émetteur-récepteur (10a) et un deuxième agencement d'émetteur-récepteur (10b), chaque agencement d'émetteur-récepteur (10a, 10b) étant agencé pour générer des signaux fluctuants à onde continue modulée en fréquence (FMCW, Frequency Modulated Continuous Wave), où le premier agencement d'émetteur-récepteur (10a) comprend un premier oscillateur (23a) et est agencé pour transmettre un premier signal fluctuant (4a) et où le deuxième agencement d'émetteur-récepteur (10b) comprend un deuxième oscillateur (23b) et est agencé pour transmettre un deuxième signal fluctuant (4b), où les agencements d'émetteur-récepteur (10a, 10b) sont agencés pour :
recevoir des signaux réfléchis (5a, 5b) ;
mélanger les signaux reçus (5a, 5b) avec le signal fluctuant transmis respectif (4a, 4b) pour obtenir un premier signal de fréquence intermédiaire (IF, Intermediate Frequency) (14a) et un deuxième signal IF (14b) ; et pour
filtrer lesdits signaux IF (14a, 14b) avec une certaine largeur de bande de filtre (B_{f}) ;
où le premier signal fluctuant (4a) comprend au moins un cycle d'une première pluralité de rampes de fréquence séquentielles (r₁) qui sont séparées par un premier temps de retard (t_{D1}) et définies par une première période de rampe (t_{T1}) et un premier temps de rampe (tᵣ), et le deuxième signal fluctuant (4b) comprend au moins un cycle d'une deuxième pluralité de rampes de fréquence séquentielles (r₂) qui sont séparées par un deuxième temps de retard (t_{D2}) et définies par une deuxième période de rampe (t_{T2}) et un deuxième temps de rampe (tᵣ), **caractérisé en ce que** chacune d'une pluralité de rampes de fréquence dans la deuxième pluralité de rampes de fréquence (r₂) est retardée avec un temps ajouté (tₐ) qui est soit fixe soit variable d'un cycle à l'autre, de telle sorte que le deuxième temps de retard (t_{D2}) est égal à une somme du premier temps de retard (t_{D1}) et du temps ajouté (tₐ), et de telle sorte qu'au moins une rampe de fréquence dans la première pluralité de rampes de fréquence et au moins une rampe de fréquence dans la deuxième pluralité de rampes de fréquence s'exécutent de telle sorte que la différence en fréquence entre elles se trouve dans la largeur de bande de filtre (Bf).

2. Système radar de véhicule (3) selon la revendication 1, **caractérisé en ce qu'une** rampe de fréquence dans la première pluralité de rampes de fréquence (r₁) et une rampe de fréquence (r₂) dans la deuxième pluralité de rampes de fréquence s'exécutent en même temps au sein d'une marge de 1 % pendant chaque cycle.

3. Système radar de véhicule (3) selon l'une quelconque des revendications 1 ou 2, **caractérisé en ce que** le système radar (3) est agencé pour fournir une entrée à une unité de commande de sécurité (35) qui à son tour est agencée pour commander un moyen de sécurité (36), où le système radar (3), l'unité de commande de sécurité (35) et le moyen de sécurité (36) sont compris dans un véhicule (1).

4. Système radar de véhicule (3) selon l'une quelconque des revendications précédentes, **caractérisé en ce que** le système radar (3) est agencé pour :
- traiter toutes les rampes dans un cycle au moyen d'une première transformée de Fourier rapide (FFT, Fast Fourier Transform), pour acquérir des informations de cible à différentes plages dans une pluralité de vecteurs complexes qui correspond au nombre de rampes dans un cycle ;
- analyser un élément de vecteur à la fois pour tous les vecteurs complexes au moyen d'une deuxième FFT puis créer une matrice bidimensionnelle dans le domaine Doppler comprenant des données concernant la plage et la vitesse relative ; et pour
- identifier des détections erronées qui apparaissent à une plage distincte et sont dispersées, et supprimer celles-ci d'un traitement ultérieur.

5. Procédé pour un système de radar de véhicule (3), où le procédé comprend :
(26) la génération de signaux fluctuants à onde continue modulée en fréquence (FMCW, Frequency Modulated Continuous Wave) ;
(27) la transmission d'un premier signal fluctuant (4a) via un premier agencement d'émetteur-récepteur (10a), le premier signal fluctuant (4a) ayant au moins un cycle d'une première pluralité de rampes de fréquence séquentielles (r₁) qui sont séparées par un premier temps de retard (t_{D1}) et définies par une première période de rampe (t_{T1}) et un premier temps de rampe (tᵣ) ;
(28) la transmission d'un deuxième signal fluctuant (4b) via un deuxième agencement d'émetteur-récepteur (10b), le deuxième signal fluctuant (4b) ayant au moins un cycle d'une deuxième pluralité de rampes de fréquence séquentielles (r₂) qui sont séparées par un deuxième temps de retard (t_{D2}) et définies par une deuxième période de rampe (t_{T2}) et un deuxième temps de rampe (tᵣ) ;
(29) la réception de signaux réfléchis (5a, 5b) via lesdits agencements d'émetteur-récepteur (10a, 10b) ;
(30) le mélange des signaux reçus (5a, 5b) avec le signal fluctuant transmis respectif (4a, 4b) pour obtenir un premier signal de fréquence intermédiaire (IF, Intermediate Frequency) (14a) et un deuxième signal IF (14b) ; et
(31) le filtrage desdits signaux IF (14a, 14b) en utilisant une certaine largeur de bande de filtre (Bf) ;
**caractérisé en ce que** le procédé comprend en outre :
(32) le retardement de chacune d'une pluralité de rampes de fréquence dans la deuxième pluralité de rampes de fréquence (r₂) avec un temps ajouté (tₐ) qui est soit fixe soit variable d'un cycle à l'autre, de telle sorte que le deuxième temps de retard (t_{D2}) est égal à une somme du premier temps de retard (t_{D1}) et du temps ajouté (tₐ), et de telle sorte qu'au moins une rampe de fréquence dans la première pluralité de rampes de fréquence et au moins une rampe de fréquence dans la deuxième pluralité de rampes de fréquence s'exécutent de telle sorte que la différence en fréquence entre elles se trouve dans la largeur de bande de filtre (Bf).

6. Procédé selon la revendication 5, **caractérisé en ce qu'**une rampe de fréquence dans la première pluralité de rampes de fréquence (r₁) et une rampe de fréquence (r₂) dans la deuxième pluralité de rampes de fréquence s'exécutent en même temps au sein d'une marge de 1 % pendant chaque cycle.

7. Procédé selon l'une quelconque des revendications 5 ou 6, **caractérisé en ce que** le procédé comprend :
- le traitement de toutes les rampes dans un cycle au moyen d'une première transformée de Fourier rapide (FFT, Fast Fourier Transform), pour acquérir des informations de cible à différentes plages dans une pluralité de vecteurs complexes qui correspond au nombre de rampes dans un cycle ;
- l'analyse d'un élément de vecteur à la fois pour tous les vecteurs complexes au moyen d'une deuxième FFT puis la création d'une matrice bidimensionnelle dans le domaine Doppler comprenant des données concernant la plage et la vitesse relative ; et
- l'identification de détections erronées qui apparaissent à une plage distincte et sont dispersées, et la suppression de celles-ci d'un traitement ultérieur.

8. Procédé selon l'une quelconque des revendications 5 à 7, **caractérisé en ce que** le matériel utilisé pour générer le signal radar est uniquement actif pendant une partie de période de cycle et est mis hors tension pendant le reste du cycle.

9. Procédé selon l'une quelconque des revendications 5 à 8, **caractérisé en ce que** le premier temps de retard t_{D}1 est changé tous les N cycles, où N est un nombre entier.
